# EUROPEAN PATENT APPLICATION

(11) **EP 4 803 671 A1**
(43) Date of publication of application: **09.09.2026**
(21) Application number: 26152863.2
(22) Date of filing: 20.01.2026
(51) Int. Cl.: C25B 15/023, C25B 9/75

(54) **ELECTROCHEMICAL CELL STACK**

(30) Priority: 07.03.2025 JP 2025036662
(71) Applicant: Toshiba Energy Systems & Solutions Corporation, Saiwai-ku Kawasaki-shi Kanagawa (JP)
(72) Inventor: YANAGI, Kosuke, Kawasaki-shi, Kanagawa (JP); KIKUCHI, Isamu, Kawasaki-shi, Kanagawa (JP)
(74) Representative: Hoffmann Eitle

(57) **Abstract**

An electrochemical cell stack according to an embodiment includes a plurality of electrochemical cell stacked one on another, and an electric potential measurement terminal for measuring an electric potential of the electrochemical cell. The electocheical cell includes an electrode plate, a flow channel plate, an electrode plate outer frame, a flow channel plate outer frame, and a sealing member. The flow channel plate outer frame is formed by adhering a plurality of sheet members by an adhesive. The electric potential measurement terminal is partially arranged between the sheet members. The electric potential measurement terminal includes a first end portion and a second end portion opposite to the first end portion. The second end portion of the electric potential measurement terminal extends outside the electrochemical cell. The first end portion of the electric potential measurement terminal is connected in a bent state to one main surface of the flow channel plate at a position inside the sealing member.

## Description

### FIELD

Embodiments described herein relate to an electrochemical cell stack.

### BACKGROUND

An electrochemical cell stack is formed by stacking a plurality of electrochemical cells. The electrochemical cell generates an electrochemical reaction by applying an electric potential difference from outside between an anode electrode and a cathode electrode with a diaphragm such as an electrolyte membrane being interposed therebetween to allow a current to flow, while supplying at least one of the anode electrode and the cathode electrode with a fluid consisting of a liquid, a gas, or a mixture of liquid and gas (referred to as anode fluid, cathode fluid, etc., herebelow), so that ionized substances pass through the diaphragm. The electrochemical cell is used, for example, in water electrolysis where water (H₂O) is supplied to the anode side and hydrogen (H₂) is taken out from the cathode outlet side, and/or carbon dioxide electrolysis where water (H₂O) is supplied to the anode side while carbon dioxide (CO₂) is supplied to the cathode side, and carbon monoxide (CO) is taken out from the cathode outlet side. An electrolyte solution, in which a small amount of ionic substance is dissolved in a liquid required for a reaction to promote the electrochemical reaction, may also be used as the anode fluid or the cathode fluid.

Flow channel plates are installed adjacent to the anode electrode and the cathode electrode in order to supply the anode electrode and the cathode electrode with the anode fluid and the cathode fluid, respectively. Flow channels through which the anode fluid and cathode fluid flow are formed in the flow channel plate. The flow channel plate is made of an electrically conductive material so that the respective electrodes are connected in series with a plurality of electrode plates and the flow channel plates being stacked.

Even when deionized water is used as the anode fluid or the cathode fluid, it is difficult to achieve zero conductivity due to impurities introduced into the fluid. A current flows between the different flow channel plates through communication holes in the stacked in the flow channel plates, so that part of the current intended for the electrochemical reaction is consumed as a leakage current. When an electrolyte solution is used as the fluid, a conductivity further increases so that a leakage current increases. Even when the anode fluid or the cathode fluid is primarily a gaseous fluid, a leakage current also occurs because some substances contained in the fluid condense and adhere to wall surfaces of the communication holes.

Thus, a structure has been proposed where an electrode plate outer frame is arranged outside the electrode plate, and a flow channel plate outer frame is arranged outside the flow channel plate. The electrode plate outer frame and the flow channel plate outer frame are provided with communication holes for supplying the anode fluid and the cathode fluid from outside the electrochemical cells. The anode fluid and the cathode fluid from the communication holes pass through connection grooves respectively arranged in both surfaces of the flow channel plate outer frame and then flow through the flow channels respectively arranged in both surfaces of the flow channel plates. Respective portions of the electrode plate outer frame and flow channel plate outer frame, which come into contact with the anode fluid and the cathode fluid, are formed of electrically insulating material. This structure allows insulation of the portions to be in contact with the fluid in the flow channel between the communication holes and the flow channel plate. This can reduce a leakage current flowing between the adjacent flow channel plates with an electrode plate being interposed therebetween.

In addition, another structure has been proposed where the electrode plate outer frame and/or the flow channel plate outer frame is formed by stacking a plurality of sheet members in a stacking direction. The sheet members are adhered to each other by, e.g., an adhesive. This structure enables relatively inexpensive fabrication of the electrode plate outer frame and the flow channel plate outer frame to thereby reduce the manufacturing cost of the electrochemical cells.

Further, yet another structure has been proposed where the stacked electrochemical cells are sandwiched between rigid members, such as metal plates, at both ends, in order to uniformly contact the respective electrochemical cells to enable a seal member arranged between the electrode plate outer frame and the flow channel plate outer frame to function.

There is a desire to provide an electric potential measurement terminal on the electrochemical cell stack for measuring an electric potential of the electrochemical cell, in order to confirm the performance and integrity of the electrochemical cells during operation of the electrochemical cell stack. In this case, an electric potential, an impedance, etc. of the electrochemical cell can be measured from outside the electrochemical cell, by connecting one end portion of the electric potential measurement terminal to the flow channel plate of the electrochemical cell and by arranging the other end portion of the electric potential measurement terminal outside the electrochemical cell,

However, when the electric potential measurement terminal is connected to the flow channel plate, the fluid (anode fluid, cathode fluid) inside the electrochemical cell may leak outside the electrochemical cell from a gap near an attachment portion of the electric potential measurement terminal.

### BRIEF DESCRIPTION OF THE DRAWINGS

Fig. 1 is a perspective view of an electrochemical cell stack according to a first embodiment.
Fig. 2 is a front view of the electrochemical cell stack of Fig. 1.
Fig. 3 is a side view of the electrochemical cell stack of Fig. 1.
Fig. 4 is a plan view of an electrode plate and an electrode plate outer frame of an electrochemical cell included in Fig. 1.
Fig. 5 is a perspective view of a flow channel plate and a flow channel plate outer frame of the electrochemical cell included in Fig. 1.
Fig. 6 is a plan view of Fig. 5.
Fig. 7 is a cross-sectional view of the electrochemical cell along an A-A line of Fig. 6.
Fig. 8 is a cross-sectional view of the electrochemical cell along a B-B line of Fig. 6.
Fig. 9 is a cross-sectional view of an electrochemical cell corresponding to Fig. 8 in an electrochemical cell stack according to a second embodiment.
Fig. 10 is a cross-sectional view of an electrochemical cell corresponding to Fig. 8 in an electrochemical cell stack according to a third embodiment.

### DETAILED DESCRIPTION

An electrochemical cell stack according to an embodiment comprises: a plurality of electrochemical cell stacked one on another; and an electric potential measurement terminal for measuring an electric potential of the electrochemical cell. The electrochemical cell includes: an electrode plate having a diaphragm, an anode electrode arranged on one main surface of the diaphragm, and a cathode electrode arranged on the other main surface of the diaphragm; a flow channel plate stacked on the electrode plate, the flow channel plate having an anode flow channel arranged to face the anode electrode, through which an anode fluid flows, and a cathode flow channel arranged to face the cathode electrode, through which a cathode fluid flows; an electrode plate outer frame arranged outside the electrode plate; a flow channel plate outer frame arranged outside the flow channel plate; and a sealing member arranged between the electrode plate outer frame and the flow channel plate outer frame. The flow channel plate outer frame is formed by adhering a plurality of sheet members by an adhesive. The electric potential measurement terminal is partially arranged between the sheet members. The electric potential measurement terminal includes a first end portion and a second end portion opposite to the first end portion. The second end portion of the electric potential measurement terminal extends outside the electrochemical cell. The the first end portion of the electric potential measurement terminal is connected in a bent state to one main surface of the flow channel plate at a position inside the sealing member.

In addition, an electrochemical cell stack according to an embodiment comprises: a plurality of electrochemical cell stacked one on another; and an electric potential measurement terminal for measuring an electric potential of the electrochemical cell. The electrochemical cell includes: an electrode plate having a diaphragm, an anode electrode arranged on one main surface of the diaphragm, and a cathode electrode arranged on the other main surface of the diaphragm; a flow channel plate stacked on the electrode plate, the flow channel plate having an anode flow channel arranged to face the anode electrode, through which an anode fluid flows, and a cathode flow channel arranged to face the cathode electrode, through which a cathode fluid flows; an electrode plate outer frame arranged outside the electrode plate; a flow channel plate outer frame arranged outside the flow channel plate; and a sealing member arranged between the electrode plate outer frame and the flow channel plate outer frame. The flow channel plate outer frame is formed by adhering a plurality of sheet members by an adhesive. The electric potential measurement terminal is partially arranged between the sheet members. The electric potential measurement terminal includes a first end portion and a second end portion opposite to the first end portion. The second end portion of the electric potential measurement terminal extends outside the electrochemical cell. The first end portion of the electric potential measurement terminal is connected to one main surface of the flow channel plate at a position outside the sealing member.

In addition, an electrochemical cell stack according to an embodiment comprises: a plurality of electrochemical cell stacked one on another; and an electric potential measurement terminal for measuring an electric potential of the electrochemical cell. The electrochemical cell includes: an electrode plate having a diaphragm, an anode electrode arranged on one main surface of the diaphragm, and a cathode electrode arranged on the other main surface of the diaphragm; a flow channel plate stacked on the electrode plate, the flow channel plate having an anode flow channel arranged to face the anode electrode, through which an anode fluid flows, and a cathode flow channel arranged to face the cathode electrode, through which a cathode fluid flows; an electrode plate outer frame arranged outside the electrode plate; a flow channel plate outer frame arranged outside the flow channel plate; and a sealing member arranged between the electrode plate outer frame and the flow channel plate outer frame. The flow channel plate outer frame is formed by adhering a plurality of sheet members by an adhesive. The electric potential measurement terminal is partially arranged between the sheet members. The electric potential measurement terminal includes a first end portion and a second end portion opposite to the first end portion. The second end portion of the electric potential measurement terminal extends outside the electrochemical cell. The first end portion of the electric potential measurement terminal is connected to an edge portion of the flow channel plate at a position inside the sealing member.

Electrochemical cell stacks according to embodiments are described herebelow with reference to the drawings.

### (First Embodiment)

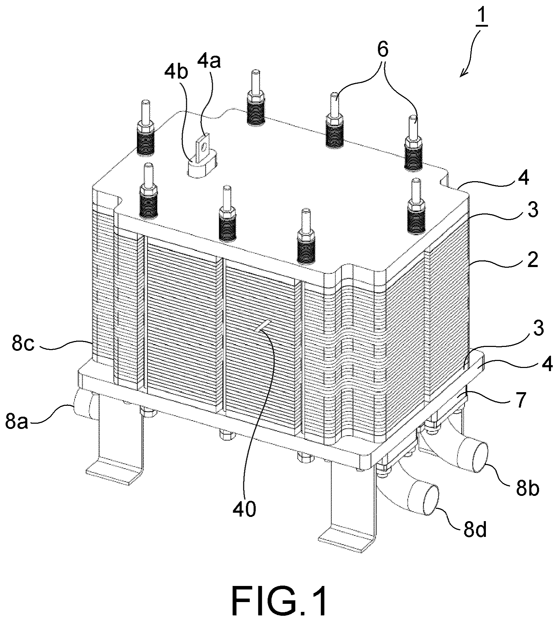

An electrochemical cell stack according to a first embodiment is described first with reference to Figs. 1 to 8.

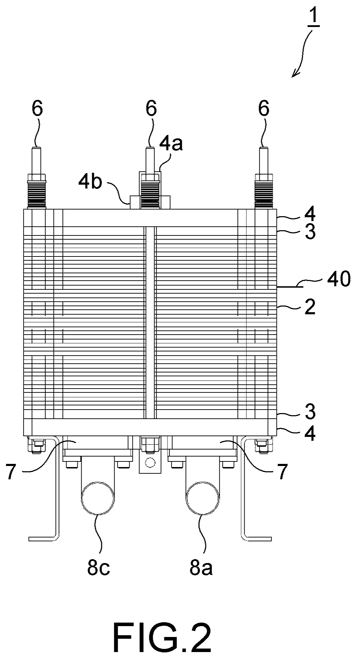

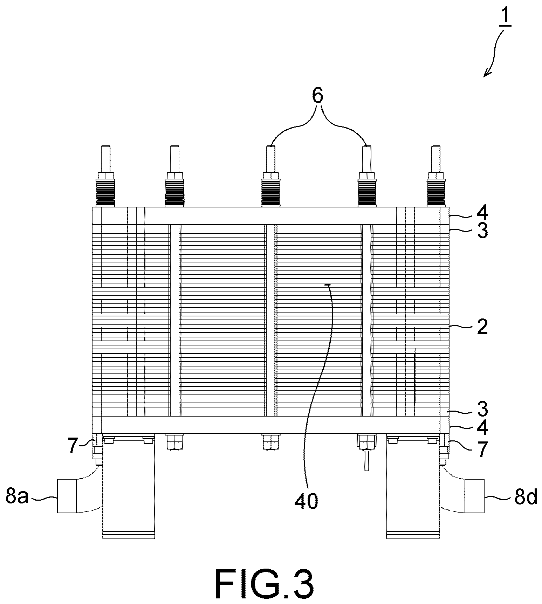

Fig. 1 is a perspective view of an electrochemical cell stack according to this embodiment. Fig. 2 is a front view of the electrochemical cell stack of Fig. 1. Fig. 3 is a side view of the electrochemical cell stack of Fig. 1. As shown in Figs. 1 to 3, the electrochemical cell stack according to this embodiment includes a plurality of electrochemical cells 2 stacked one on another. The electrochemical cell stack 1 is formed by stacking the plurality of electrochemical cells 2.

As shown in Figs. 1 to 3, the electrochemical cell stack 1 includes an insulating plates 3 and a metal plate 4. The insulating plate 3 is a plate-shaped insulator made of an electrically insulating material. The insulating plate 3 is arranged on each end of the plurality of stacked electrochemical cells 2 in the stacking direction. Namely, the insulating plate 3 includes two insulating plates 3, i.e., an upper (upside in Figs. 1 to 3) insulating plate 3 and a lower (downside in Figs. 1 to 3) insulating plate 3. The two insulating plates 3 are arranged such that the plurality of electrochemical cells 2 are sandwiched therebetween.

The metal plate 4 is a plate-shaped conductor. The metal plate 4 is arranged on each of the two insulating plates 3. Namely, the metal plate 4 includes two metal plates 4, i.e., a metal plate 4 arranged on an upper surface of the upper insulating plate 3, and a metal plate 4 arranged on a lower surface of the lower insulating plate 3. The two metal plates 4 are arranged such that the plurality of electrochemical cells 2 and the two insulating plates 3 are sandwiched therebetween. The metal plates 4 may be embedded in the respective insulating plates 3.

The metal plate 4 has a terminal 4a extending outside. An insulating bushing 4b is provided between the metal plate 4 and the terminal 4a. The terminal 4a is electrically connected to an external power source via a cable or the like. This allows a voltage to be applied to each electrochemical cell 2 from the external power source, and a current to flow therethrough.

The upper surface of the upper metal plate 4 and the lower surface of the lower metal plate 4 are fixed by a tie rod 6. A plurality of the tie rods 6 may be provided. Clamping plates may be respectively provided on the upper surface of the upper metal plate 4 and the lower surface of the lower metal plate 4. Clamping force caused by the tie rods 6 can clamp the respective electrochemical cells 2 in a direction in which they are brought close to each other.

The electrochemical cell stack 1 also includes insulating joints 7 and metal pipes 8a, 8b, 8c, 8d. The insulating plate 3 is provided with a first opening. The metal plate 4 is provided with a second opening correspondingly to the first opening, the second opening having an inner diameter larger than an inner diameter of the first opening. Provision of the first openings and the second openings to which the metal pipes 8a, 8b, 8c, 8d are attached allows fluids to flow toward communication holes of the electrochemical cells 2.

The metal pipe 8a may be an anode fluid flow-in metal pipe 8a into which an anode fluid flows. The metal pipe 8b may be an anode fluid flow-out metal plate 8b out of which the anode fluid flows. The metal pipe 8c may be a cathode fluid flow-in metal pipe 8c into which a cathode fluid flows. The metal pipe 8d may be a cathode fluid flow-out metal pipe 8d out of which the cathode fluid flows. Namely, the metal plate 4 has the anode fluid flow-in metal pipe 8a, anode fluid flow-out metal plate 8b, the cathode fluid flow-in metal pipe 8, and the cathode fluid flow-out metal pipe 8. These metal pipes 8a, 8b, 8c, 8d are attached to the metal plate 4 through the insulating joints 7.

The anode fluid flow-in metal pipe 8a is in communication with anode fluid inlet communication holes 12, 22 of the electrochemical cell 2 described later. The anode fluid flow-out metal pipe 8b is in communication with anode fluid outlet communication holes 13, 23 of the electrochemical cell 2 described later. The cathode fluid flow-in metal pipe 8c is in communication with cathode fluid inlet communication holes 14, 24 of the electrochemical cell 2 described later. The cathode fluid flow-out metal plate 8d is in communication with cathode fluid outlet communication holes 15, 25 of the electrochemical cell 2 described later.

An anode fluid supplied from outside flows into the anode fluid flow-in metal pipe 8a. The anode fluid having been electrochemically reacted by each electrochemical cell 2 flows outside from the anode fluid flow-out metal pipe 8b. A cathode fluid supplied from outside flows into the cathode fluid flow-in metal pipe 8c. The cathode fluid having been electrochemically reacted by each electrochemical cell 2 flows outside from the cathode fluid flow-out metal pipe 8d.

The electrochemical cell stack 1 also includes an electric potential measurement terminal 40. The electric potential measurement terminal 40 is used to measure an electric potential and an impedance of the electrochemical cell 2. The electric potential measurement terminal 40 is electrically conductive. The electric potential measurement terminal 40 is made of, e.g., a metal material. The electric potential measurement terminal 40 is formed to have a plate shape or a pin shape.

The electric potential measurement terminal 40 is attached to the electrochemical cell 2. The electric potential measurement terminal 40 may be attached to any one electrochemical cell 2 of the plurality of electrochemical cells 2 included in the electrochemical cell stack 1. The electrochemical cell stack 1 may include a plurality of the electric potential measurement terminals 40. The electric potential measurement terminals 40 may be respectively attached to some electrochemical cells 2 of the plurality of electrochemical cells 2 included in the electrochemical cell stack 1. The electric potential measurement terminals 40 may be respectively attached to all the electrochemical cells 2 of the plurality of electrochemical cells 2 included in the electrochemical cell stack 1. An attachment structure of the electric potential measurement terminal 40 is described later.

The electrochemical cell 2 includes an electrode plate 10 and an electrode plate outer frame 11, and a flow channel plate 20 and a flow channel plate outer frame 21. The electrochemical cell 2 has a structure in which the electrode plate 10 and the electrode plate outer frame 11, and the flow channel plate 20 and the flow channel plate outer frame 21 are stacked as a set.

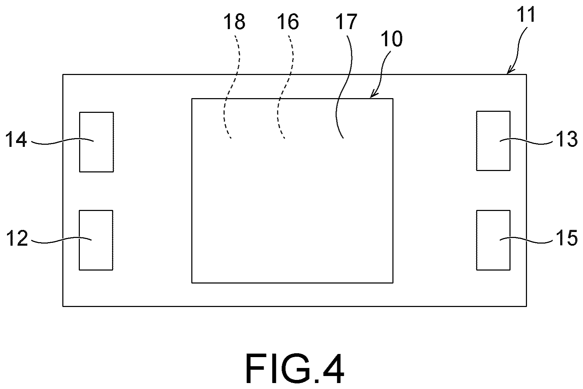

Fig. 4 is a plan view of the electrode plate 10 and the electrode plate outer frame 11. As shown in Fig. 4, the electrode plate 10 has a diaphragm 16, an anode electrode 17, and a cathode electrode 18. The anode electrode 17 and the cathode electrode 18 are arranged such that the diaphragm 16 is sandwiched therebetween. Namely, the anode electrode 17 and the cathode electrode 18 are respectively arranged on both sides of the diaphragm 16. The anode electrode 17 is arranged on one main surface (front side surface in a sheet plane of Fig. 4) of the diagram 16, and the cathode electrode 18 is arranged on the other main surface (rear side surface in the sheet plane of Fig. 4) of the diaphragm 16.

The diaphragm 16 may be an ion-permeable membrane such as a solid polymer membrane (ion exchange membrane) or a solid electrolyte membrane (electrolyte membrane). The anode electrode 17 and the cathode electrode 18 may be formed by coating a gas-permeable substrate made from carbon or metal, with a metal such as nickel, iridium, gold, silver, or platinum, or a catalyst containing a metal oxide such as nickel oxide, iridium dioxide, or cobalt oxide.

As shown in Fig. 4, the electrode plate outer frame 11 is arranged outside the electrode plate 10. The electrode plate outer frame 11 is joined to an end portion (outer peripheral portion) of the electrode plate 10.

The electrode plate outer frame 11 has the anode fluid inlet communication hole 12, the anode fluid outlet communication hole 13, the cathode fluid inlet communication hole 14, and the cathode fluid outlet communication hole 15. These communication holes 12, 13, 14, 15 are respectively provided at positions distant from the electrode plate 10. These communication holes 12, 13, 14, 15 respectively pass through the electrode plate outer frame 11 in a thickness direction (stacking direction).

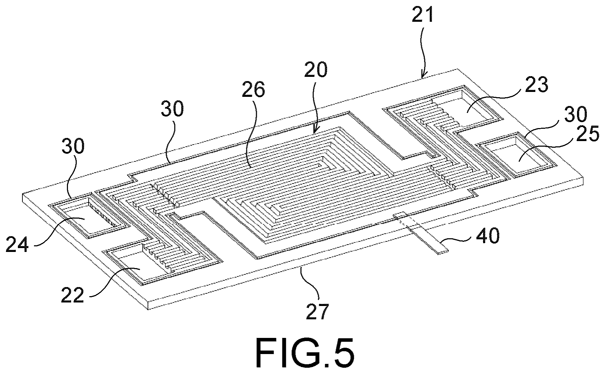

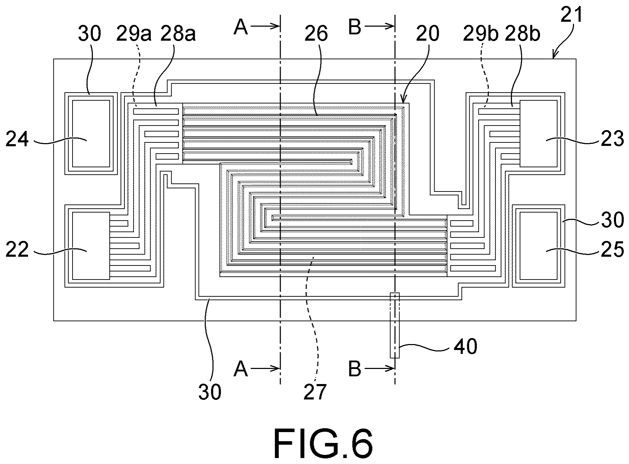

Fig. 5 is a perspective view of the flow channel plate 20 and the flow channel plate outer frame 21. Fig. 6 is a plan view of Fig. 5. As shown in Figs. 5 and 6, the flow channel plate 20 has an anode flow channel 26 and a cathode flow channel 27. The anode flow channel 26 and the cathode flow channel 27 are arranged in both surfaces of the flow channel plate 20. The anode flow channel 26 is arranged in a surface of the flow channel plate 20, which surface faces the anode electrode 17 (upper surface in Fig. 5, front side surface in a sheet plane of Fig. 6). Namely, the anode flow channel 26 is arranged to face the anode electrode 17 of the electrode plate 10. The cathode flow channel 27 is arranged in a surface of the flow channel plate 20, which surface faces the cathode electrode 18 (lower surface in Fig. 5, rear side surface in the sheet plane of Fig. 6). Namely, the cathode flow channel 27 is arranged to face the cathode electrode 18.

The anode flow channel 26 is configured to allow the anode fluid to flow therethrough. The anode flow channel 26 may be made by a recess and a protrusion formed in the surface of the flow channel plate 20, which surface faces the anode electrode 17, and the anode fluid may flow through the recess and the protrusion. The anode flow channel 26 may be a serpentine-type flow channel having a plurality of bends.

The cathode flow channel 27 is configured to allow the cathode fluid to flow therethrough. The cathode flow channel 27 may be made by a recess and a protrusion formed in the surface of the flow channel plate 20, which surface faces the cathode electrode 18, and the cathode fluid may flow through the recess and the protrusion. The cathode flow channel 27 may be a serpentine-type flow channel having a plurality of bends.

The anode flow channel 26 and the cathode flow channel 27 may be formed by press-forming a thin plate which serves as the flow channel plate 20. Namely, a recess and a protrusion may be formed by press-forming in the surface of the flow channel plate 20, which surface faces the anode electrode 17, and a recess and a protrusion may be formed by press-forming in the surface of the flow channel plate 20, which surface faces the cathode electrode 18. The recess and the protrusion formed in the surface of the flow channel plate 20, which surface faces the anode electrode 17, may function as the anode flow channel 26, and the recess and the protrusion formed in the surface of the flow channel plate 20, which surface faces the cathode electrode 18, may function as the cathode flow channel 27. In this case, the recess of the recess and protrusion of the anode flow channel 26 corresponds the protrusion of the recess and protrusion of the cathode flow channel 27, and the protrusion of the recess and protrusion of the anode flow path 26 corresponds to the recess of the recess and protrusion of the cathode flow channel 27.

The flow channel plate 20 may be made of an electrically conductive material such as carbon, a mixture of carbon and resin, or metal. In addition, the flow channel plate 20 may be formed by coating a surface of an electrically conductive material with an electrically conductive coating agent in order to increase corrosion potential or reduce contact resistance.

As shown in Figs. 5 and 6, the flow channel plate outer frame 21 is arranged outside the flow channel plate 20. The flow channel plate outer frame 21 is joined to an end portion (outer peripheral portion) of the flow channel plate 20.

The flow channel plate outer frame 21 has the anode fluid inlet communication hole 22, the anode fluid outlet communication hole 23, the cathode fluid inlet communication hole 24, and the cathode fluid outlet communication hole 25. These communication holes 22, 23, 24, 25 are respectively provided at positions distant from the flow channel plate 20. These communication holes 22, 23, 24, 25 respectively pass through the flow channel plate outer frame in a thickness direction (stacking direction).

In a state where the electrode plate 10 and the electrode plate outer frame 11, and the flow channel plate 20 and the flow channel plate outer frame 21 are stacked, the communication holes 22, 23, 24, 25 overlap with the corresponding communication holes 12, 13, 14, 15. The anode fluid inlet communication hole 12 is in communication with the anode fluid inlet communication hole 22, the anode fluid outlet communication hole 13 is in communication with the anode fluid outlet communication hole 23. The cathode fluid inlet communication hole 14 is in communication with the cathode fluid inlet communication hole 24, and the cathode fluid outlet communication hole 15 is in communication with the cathode fluid outlet communication hole 25. The anode fluid inlet communication holes 12, 22 are in communication with the anode fluid flow-in metal pipe 8a, and the anode fluid outlet communication holes 13, 23 are in communication with the anode fluid flow-out metal pipe 8b. The cathode fluid inlet communication holes 14, 24 are in communication with the cathode fluid flow-in metal pipe 8c, and the cathode fluid outlet communication holes 15, 25 are in communication with the cathode fluid flow-out metal pipe 8d.

The anode fluid supplied from outside flows into the anode fluid inlet communication holes 12, 22 through the anode fluid flow-in metal pipe 8a. The anode fluid having flown through the anode flow channel 26 to be electrochemically reacted flows outside from the anode fluid outlet communication holes 13, 23 through the anode fluid flow-out metal pipe 8b. The cathode fluid supplied from outside flows into the cathode fluid inlet communication holes 14, 24 through the cathode fluid flow-in metal pipe 8c. The cathode fluid having having flown through the cathode flow channel 27 to be electrochemically reacted flows outside from the cathode fluid outlet communication holes 15, 25 through the cathode fluid flow-out metal pipe 8d.

The flow channel plate outer frame 21 also has anode connection grooves 28a, 28b, and cathode connection grooves 29a, 29b.

The anode connection groove 28a connects the anode fluid inlet communication hole 22 and the anode flow channel 26. Namely, the anode connection groove 28a allows the anode fluid to flow from the anode fluid inlet communication hole 22 to the anode flow channel 26. The anode connection groove 28b connects the anode flow channel 26 and the anode fluid outlet communication hole 23. Namely, the anode connection groove 28b allows the anode fluid to flow from the anode flow channel 26 to the anode fluid outlet communication hole 23.

The anode connection grooves 28a, 28b may be formed of a plurality of grooves formed in the surface of the flow channel plate outer frame 21. The anode connection groove 28a may be formed to extend from the anode fluid inlet communication hole 22 to the anode flow channel 26. The anode connection groove 28b may be formed to extend from the anode flow channel 26 to the anode fluid outlet communication hole 23. The anode connection grooves 28a, 28b may be serpentine-type flow channels each having a plurality of bends.

The cathode connection groove 29a connects the cathode fluid inlet communication hole 24 and the cathode flow channel 27. Namely, the cathode connection groove 29a allows the cathode fluid to flow from the cathode fluid inlet communication hole 24 to the cathode flow channel 27. The cathode connection groove 29b connects the cathode flow channel 27 and the cathode fluid outlet communication hole 25. Namely, the cathode connection groove 29b allows the cathode fluid to flow from the cathode flow channel 27 to the cathode fluid outlet communication hole 25.

The cathode connection grooves 29a, 29b may be formed of a plurality of grooves formed in the surface of the flow channel plate outer frame 21. The cathode connection groove 29a may be formed to extend from the cathode fluid inlet communication hole 24 to the cathode flow channel 27. The cathode connection groove 29b may be formed to extend from the cathode flow channel 27 to the cathode fluid outlet communication hole 25. The cathode connection grooves 29a, 29b may be parallel flow-type flow channels which linearly extend.

The flow channel plate outer frame 21 also has a sealing member 30. As shown in Figs. 5 and 6, the sealing member 30 may be provided to surround the anode fluid inlet communication hole 22, the anode connection groove 28a, the anode flow channel 26, the anode connection groove 28b, and the anode fluid outlet communication hole 23. In addition, the sealing member 30 may be provided to surround the cathode fluid inlet communication hole 24. In addition, the sealing member 30 may be provided to surround the cathode fluid outlet communication hole 25. In addition, the sealing member 30 may be provided to surround the cathode fluid inlet communication hole 24, the cathode connection groove 29a, the cathode flow channel 27, the cathode connection groove 29b, and the cathode fluid outlet communication hole 25, although not shown. In addition, the sealing member 30 may be provided to surround the anode fluid inlet communication hole 22. In addition, the sealing member 30 may be provided to surround the anode fluid outlet communication hole 23.

The sealing member 30 is a member which seals a gap between the members in order to prevent the anode fluid and/or the cathode fluid from leaking outside from the gap when the electrode plate 10 and the electrode plate outer frame 11, and the flow channel plate 20 and the flow channel plate outer frame 21 are stacked. The sealing member 30 may be a resilient body made of rubber, for example. In this case, when the electrode plate 10 and the electrode plate outer frame 11, and the flow channel plate 20 and the flow channel plate outer frame 21 are stacked and clamped in a direction in which they are brought close to each other, the seal member 30 is compressed between the electrode plate outer frame 11 and the flow channel plate outer frame 21 so that its reaction force can seal the gap between the members. Alternatively, the seal member 30 may be an adhesive. In this case, when the electrode plate 10 and the electrode plate outer frame 11, and the flow channel plate 20 and the flow channel plate outer frame 21 are stacked and clamped in a direction in which they are brought close to each other, the electrode plate outer frame 11 and the flow channel plate outer frame 21 can be adhered to each other to seal the gap between the members.

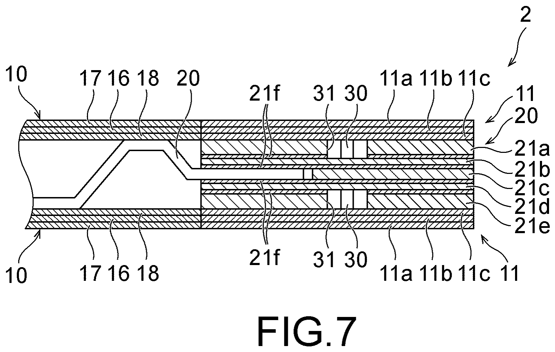

Fig. 7 is a cross-sectional view of the electrochemical cell 2 along an A-A line of Fig. 6. As shown in Fig. 7, the electrode plate outer frame 11 is formed by adhering a plurality of sheet members by an adhesive in the stacking direction. In the example shown in Fig. 7, the electrode plate outer frame 11 is formed by adhering three sheet members 11a, 11b, 11c by the adhesive. In the electrode plate outer frame 11 shown in Fig. 7, the sheet member 11a, the sheet member 11b and the sheet member 11c are arranged in this order from one side (upper side in Fig. 7) in the stacking direction. The sheet member 11a and the sheet member 11b are adhered to each other by the adhesive. The sheet member 11b and the sheet member 11c are also adhered to each other by the adhesive.

The sheet members 11a, 11b, 11c may be made of an electrically insulating material, such as a resin material such as fluororesin, polyethylene terephthalate (PET), polyphenylene sulfide (PPS), or polyethylene naphthalate (PEN), or a rubber material such as fluororubber, ethylene propylene diene monomer (EPDM) rubber, or silicone rubber. Alternatively, the sheet members 11a, 11b, 11c may be made of a rigid material such as a metal plate. For example, the sheet member 11b (inside sheet member), which is not in contact with fluids such as the anode fluid and the cathode fluid, may be made of a rigid material such as a metal plate, and the sheet members 11a, 11c (outermost sheet members), which are in contact with the fluids, may be made of an electrically insulating material. Alternatively, the sheet members 11a, 11c in contact with the fluids may be made by coating a surface of an electrically conductive substrate, such as a metal plate, with an electrically insulating material. It is sufficient that at least a part of the sheet member 11a, 11c, which is in contact with the fluids is provided with an electrically insulating material.

The adhesive has electrical insulation and heat resistance. The adhesive has heat resistance of, e.g., 100 degrees or more in order to withstand heat generated upon electrochemical reaction. The adhesive is, for example, an acrylic-based adhesive, a silicone-based adhesive, or an epoxy-based adhesive.

As shown in Fig. 7, the flow channel plate outer frame 21 is also formed by adhering a plurality of sheet members by an adhesive in the stacking direction. In the example shown in Fig. 7, the flow channel plate outer frame 21 is formed by adhering five sheet members 21a, 21b, 21c, 21d, 21e in the stacking direction by an adhesive 21f. In the flow channel plate outer frame 21 shown in Fig. 7, the sheet member 21, the sheet member 21b, the sheet member 21c, the sheet member 21d and the sheet member 221e are arranged in this order from one side (upper side in Fig. 7) in the stacking direction. The sheet member 21a and the sheet member 21b are adhered to each other by the adhesive 21f. The sheet member 21b and the sheet member 21c are also adhered to each other by the adhesive 21f. The sheet member 21c and the sheet member 21d are also adhered to each other by the adhesive 21f. The sheet member 21d and the sheet member 21e are also adhered to each other by the adhesive 21f.

As shown in Fig. 7, an end portion of the flow channel plate 20 may be sandwiched between the two sheet members 21b and 21d. The end portions of the flow channel plate 20 may be adhered to the respective sheet members 21b, 21d each other by the adhesive 21f.

The sheet members 21a, 21b, 21c, 21d, 21e may be made of an electrically insulating material, such as a resin material such as fluororesin, polyethylene terephthalate (PET), polyphenylene sulfide (PPS), or polyethylene naphthalate (PEN), or a rubber material such as fluororubber, ethylene propylene diene monomer (EPDM) rubber, or silicone rubber. Alternatively, the sheet members 21a, 21b, 21c, 21d, 21e may be made of a rigid material such as a metal plate. For example, the sheet members 21b, 21c, 21d (inside sheet members), which are not in contact with fluids such as the anode fluid and the cathode fluid, may be made of a rigid material such as a metal plate, and the sheet members 21a, 21e (outermost sheet members), which are in contact with the fluids, may be made of an electrically insulating material. Alternatively, the sheet members 21a, 21e in contact with the fluids may be made by coating a surface of an electrically conductive substrate, such as a metal plate, with an electrically insulating material. It is sufficient that at least a part of the sheet member 21a, 21e, which is in contact with the fluids, is provided with an electrically insulating material.

The adhesive 21f has electrical insulation and heat resistance. The adhesive 21f has heat resistance of, e.g., 100 degrees or more in order to withstand heat generated upon electrochemical reaction. The adhesive 21f is, for example, an acrylic-based adhesive, a silicone-based adhesive, or an epoxy-based adhesive.

As shown in Fig. 7, the sealing member 30 is arranged between the electrode plate outer frame 11 and the flow channel plate outer frame 21. The sealing member 30 nay be arranged in a sealing groove 31 formed in a surface of the flow channel plate outer frame 21. In the example shown in Fig. 7, the sealing groove 31 is formed by a through-groove formed in the outermost sheet members 21a, 21e of the flow channel plate outer frame 21.

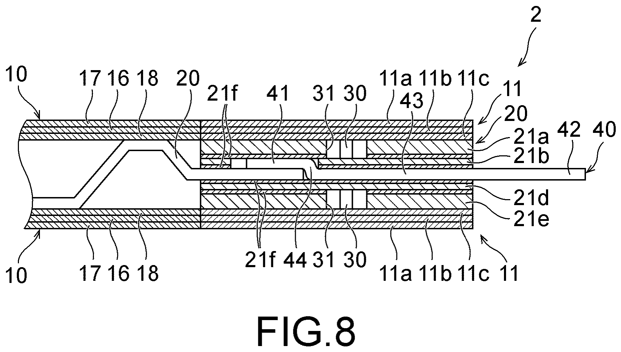

In addition, as described above, the electric potential measurement terminal 40 is attached to the electrochemical cell 2. The attachment structure of the electric potential measurement terminal 40 is described using Fig. 8. Fig. 8 is a cross-sectional view of the electrochemical cell along a B-B line of Fig. 6. Namely, Fig. 8 is a cross-sectional view of the electrochemical cell 2 at a position to which the electric potential measurement terminal 40 is attached.

The electric potential measurement terminal 40 is partially arranged between the sheet members 21a, 21b, 21c, 21d, 21e of the flow channel plate outer frame 21. Namely, a part of the electric potential measurement terminal 40 is arranged between the sheet members 21a, 21b, 21c, 21d, 21e of the flow channel plate outer frame 21. In the example shown in Fig. 8, a part of the electric potential measurement terminal 40 is arranged between the sheet members 21a and 21d, and another part of the electric potential measurement terminal 40 is arranged between the sheet members 21b and 21d.

The electric potential measurement terminal 40 includes a first end portion 41, a second end portion 42, and a center portion 43.

The first end portion is connected to the flow channel plate 20. The first end portion 41 is arranged between the sheet members 21a and 21d. More specifically, a void is formed partially in the sheet members 21b, 21c, and the first end portion 41 is arranged in the void. The first end portion 41 is located inside the sealing member 30. Inside means a side toward the center of the electrochemical cell 2.

The second end portion 42 is located opposite to the first end portion 41. The second end portion 42 extends outside the electrochemical cell 2. Namely, at least a part of the second end 42 is located outside the electrochemical cell 2.

The center portion 43 is positioned between the first end portion 41 and the second end portion 42. The center portion 43 is arranged between the sheet members 21b and 21d. More specifically, a void is formed partially in the sheet member 21c, and the center portion 43 is arranged in the void.

As shown in Fig. 8, in this embodiment, the electric potential measurement terminal 40 is bent. Namely, the electric potential measurement terminal 40 has a bent portion 44 which is bent in the stacking direction.

The bent portion 44 is arranged inside the sealing member 30. The bent portion 44 is included in the first end portion 41. Namely, the first end portion 41 is bent. The first end portion 41 is connected to one main surface (upper surface in Fig. 8) of the flow channel plate 20. Namely, in this embodiment, the first end portion 41 of the electric potential measurement terminal 40 is connected in a bent state to the one main surface of the flow channel plate 20 at a position inside the sealing member 30. The electric potential measurement terminal 40 is adhered to the sheet members 21a, 21b, 21d each other by the adhesive 21f.

Next, an operation of the electrochemical cell stack 1 according to this embodiment is described.

First, a cathode fluid and an anode fluid are supplied to the electrochemical cell stack 1. The cathode fluid supplied to the electrochemical cell stack 1 passes the cathode fluid flow-in metal pipe 8c to flow into the cathode fluid inlet communication holes 14, 24 of each electrochemical cell 2. Subsequently, the cathode fluid flows from the cathode fluid inlet communication hole 24 into the cathode connection groove 29a of the flow channel plate outer frame 21 to flow through the cathode connection groove 29a. Then, the cathode fluid having flown through the cathode connection groove 29a flows into the cathode flow channel 27 of the flow channel plate 20. Thereafter, the cathode fluid flows through the cathode flow channel 27 while being in contract with the cathode electrode 18 of the electrode plate 10.

In addition, the anode fluid supplied to the electrochemical cell stack 1 passes the anode fluid flow-in metal pipe 8a to flow into the anode fluid inlet communication holes 12, 22 of each electrochemical cell 2. Subsequently, the anode fluid flows from the anode fluid inlet communication hole 22 into the anode connection groove 28a of the flow channel plate outer frame 21 to flow through the anode connection groove 28a. Then, the anode fluid having flown through the anode connection groove 28a flows into the anode flow channel 26 of the flow channel plate 20. Thereafter, the anode fluid flows through the anode flow channel 26 while being in contact with the anode electrode 17 of the electrode plate 10.

At least some of the constituent substances of the cathode fluid having been in contact with the cathode electrode 18 and the anode fluid having been in contact with the anode electrode 17 react with catalyst on the electrodes to be ionized. In this state, by applying predetermined voltages to both ends of the electrochemical cell stack 1 in the stacking direction, an electric potential difference occurs between the cathode electrode 18 and the anode electrode 17 of the electrode plate 10 with the electrically insulating diaphragm 16 being interposed therebetween. This allows the predetermined ionized substances in the fluids pass through the diaphragm 16 to generate an electrochemical reaction which alters the material compositions of the cathode fluid and the anode fluid.

For example, supplying water (H₂O) to the anode side yields a water electrolysis reaction by which hydrogen (H₂) is taken out from the cathode outlet side. In addition, for example, supplying water (H₂O) to the anode side and carbon dioxide (CO₂) to the cathode side yields a carbon dioxide electrolysis reaction by which a mixed gas containing carbon monoxide (CO) is taken out from the cathode outlet side.

The cathode fluid having been electrochemically reacted flows from the cathode fluid 27 of the flow channel plate 20 into the cathode connection groove 29b of the flow channel plate outer frame 21. Subsequently, the cathode fluid flows through the cathode connection groove 29b. Then, the cathode fluid having flown through the cathode connection groove 29b reaches the cathode fluid outlet communication hole 25. Thereafter, the cathode fluid flows outside from the cathode fluid outlet communication holes 15, 25 through the cathode fluid flow-out metal pipe 8d.

In addition, the anode fluid having been electrochemically reacted flows from the anode flow channel 26 of the flow channel plate 20 into the anode connection groove 28b of the flow channel plate outer frame 21. Subsequently, the anode fluid flows through the anode connection groove 28b. Then, the anode fluid having flown through the anode connection groove 28b reaches the anode fluid outlet communication hole 23. Thereafter, the anode fluid flows outside from the anode fluid outlet communication holes 13, 23 through the anode fluid flow-out metal pipe 8b.

According to this embodiment, the first end portion 41 of the electric potential measurement terminal 40 is connected in a bent state to the one main surface of the flow channel plate 20 at a position inside the sealing member 30. This structure can shield the gap near the attachment portion of the electric potential measurement thermal 40 by the sheet members 21a, 21b, 21c, 21d, 21e and the adhesive 21f of the flow channel plate outer frame 21 (see Fig. 8). This can prevent the fluids (anode fluid, cathode fluid) inside the electrochemical cell 2 from leaking outside the electrochemical cell 2 from a gap near the attachment portion of the electric potential measurement terminal 40. The second end 42 of the electric potential measurement terminal 40 having the first end portion 41 connected to the flow channel plate 20 so as to be electrically connected to the flow channel plate 20 can be drawn outside the electrochemical cell 2. This allows an electric potential of the electrochemical cell 2 to be measured, while preventing leakage of the fluids outside.

### (Second Embodiment)

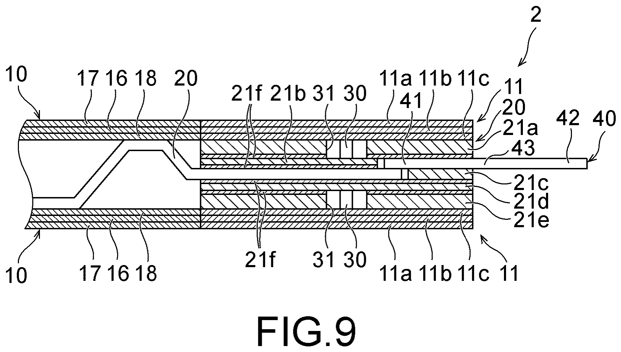

Next, an electrochemical cell stack 2 according to a second embodiment is described with reference to Fig. 9.

The second embodiment shown in Fig. 9 mainly differs in that the first end portion of the electric potential measurement terminal is connected to one main surface of the flow channel plate at a position outside the sealing member. Other structures are substantially the same as those of the first embodiment shown in Figs. 1 to 8. In Fig. 9, identical parts to those in the first embodiment shown in Figures 1 to 8 are designated by the same reference numerals, and detailed descriptions thereof are omitted.

Fig. 9 is a cross-sectional view of an electrochemical cell 2 corresponding to Fig. 8 of the electrochemical cell stack 1 according to the second embodiment. As shown in Fig. 9, in this embodiment, the electric potential measurement terminal 40 is not bent, unlike the aforementioned first embodiment. Namely, the electric potential measurement terminal 40 does not include the bent portion 44 like the aforementioned first embodiment. In other words, the electric potential measurement terminal 40 is formed to extend straight.

In addition, an end portion of the flow channel plate 20 is arranged at a position outside the sealing member 30. Outside means a side away from the center of the electrochemical cell 2. Namely, in this embodiment, the flow channel plate 20 has a larger size than the flow channel plate 20 of the aforementioned first embodiment.

The first end portion 41 of the electric potential measurement terminal 41 is arranged between the sheet members 21a and 2c. More specifically, a void is formed partially in the sheet member 21b, and the first end portion 41 is arranged in the void.

The first end portion 41 of the electric potential measurement terminal 40 is arranged at a position outside the sealing member 30. The first end portion 41 is connected to the one main surface (upper surface in Fig. 9) of the flow channel plate 20. Namely, in this embodiment, the first end portion 41 of the electric potential measurement terminal 40 is connected to the one main surface of the flow channel plate 20 at a position outside the sealing member 30.

This embodiment can also prevent fluids inside the electrochemical cell 2 from leaking outside from a gap near the attachment portion of the electric potential measurement terminal 40. The second end 42 of the electric potential measurement terminal 40 having the first end portion 41 connected to the flow channel plate 20 so as to be electrically connected to the flow channel plate 20 can be drawn outside the electrochemical cell 2. This allows an electric potential of the electrochemical cell 2 to be measured, while preventing leakage of the fluids outside.

In addition, according to this embodiment, it is not necessary to bend the electric potential measurement terminal 40. This facilitates the manufacture of the electrochemical cell 2 and the electrochemical cell stack 1.

### (Third Embodiment)

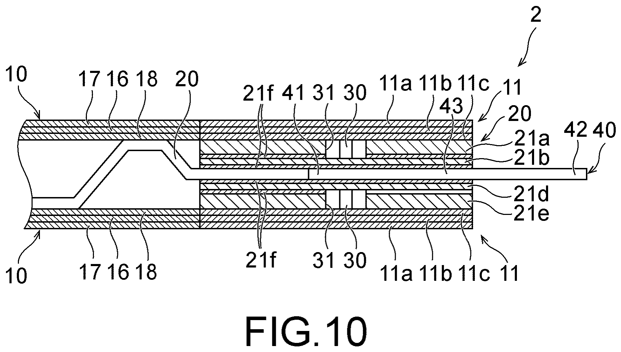

Next, an electrochemical cell stack 2 according to a third embodiment is described with reference to Fig. 10.

The third embodiment shown in Fig. 10 mainly differs in that the first end portion of the electric potential measurement terminal is connected to an edge portion of the flow channel plate at a position inside the sealing member. Other structures are substantially the same as those of the first embodiment shown in Figs. 1 to 8. In Fig. 10, identical parts to those in the first embodiment shown in Figures 1 to 8 are designated by the same reference numerals, and detailed descriptions thereof are omitted.

Fig. 10 is a cross-sectional view of an electrochemical cell 2 corresponding to Fig. 8 of the electrochemical cell stack 1 according to the second embodiment. As shown in Fig. 10, in this embodiment, the electric potential measurement terminal 40 is not bent, unlike the aforementioned first embodiment. Namely, the electric potential measurement terminal 40 does not include the bent portion 44 like the aforementioned first embodiment. In other words, the electric potential measurement terminal 40 is formed to extend straight.

In addition, the first end portion 41 of the electric potential measurement terminal 40 is arranged between the sheet members 21b and 21d. More specifically, a void is formed partially in the sheet member 21c, and the first end portion 41 is arranged in the void.

The first end portion 41 of the electric potential measurement terminal 40 is arranged at a position inside the sealing member 30. The first end portion 41 is connected to an edge portion (outer peripheral edge) of the flow channel plate 20. Namely, in this embodiment, the first end portion 41 of the electric potential measurement terminal 4 is connected to the edge portion of the flow channel plate 20 at a position inside the sealing member 30. In this case, the first end portion 41 of the electric potential measurement terminal 40 may be welded to the flow channel plate 20.

In addition, in this embodiment, the electric potential measurement terminal 40 may be integrated with the flow channel plate 20. Namely, the flow channel plate 20 and the electric potential measurement terminal 40 may be integrally formed during manufacture. In other words, the electric potential measurement terminal 40 may be formed of a part of the flow channel plate 20. In this case, the flow channel plate 20 may have a larger size than the aforementioned flow channel plate e20 of the first embodiment by an area of the electric potential measurement terminal 40. For example, the electric potential measurement terminal 40 may be formed by cutting a flow channel plate 20 that is a little larger than the aforementioned flow channel plate 20 of the first embodiment.

This embodiment can also prevent fluids inside the electrochemical cell 2 from leaking outside from a gap near the attachment portion of the electric potential measurement terminal 40. The second end 42 of the electric potential measurement terminal 40 having the first end portion 41 connected to the flow channel plate 20 so as to be electrically connected to the flow channel plate 20 can be drawn outside the electrochemical cell 2. This allows an electric potential of the electrochemical cell 2 to be measured, while preventing leakage of the fluids outside.

In addition, according to this embodiment, it is not necessary to bend the electric potential measurement terminal 40. This facilitates the manufacture of the electrochemical cell 2 and the electrochemical cell stack 1.

In addition, since the electric potential measurement terminal 40 is integrated with the flow channel plate 20, it is not necessary to separately prepare the electric potential measurement terminal 40.

The aforementioned embodiment can measure an electric potential of the electrochemical cell while preventing leakage of a fluid outside.

While certain embodiments have been described, these embodiments have been presented by way of example only, and are not intended to limit the scope of the inventions. Indeed, the novel methods and systems described herein may be embodied in a variety of other forms; furthermore, various omissions, substitutions and changes in the form of the methods and systems described herein may be made without departing from the sprit of the inventions. The accompanying claims and their equivalents are intended to cover such forms or modifications as would fail within the scope and spirit of the invention.

For example, the width of the groove of each flow channel of the flow channel plate, its number and its shape, the number of bends of the serpentine-type flow channel and a chamfered shape of the bend, as well as shapes of branch and merge of the parallel-type flow channel are not limited to the illustrations. In addition, the shape of each connection groove of the flow channel plate outer frame is not limited to the illustrations.

In addition, the structures of the electrode plate outer frame and the flow channel plate outer frame are not limited to the illustrations. For example, in the aforementioned embodiment, the electrode plate outer frame is formed by three sheet members, but the electrode plate outer frame may be formed by two sheet members or four or more sheet members. In addition, in the aforementioned embodiment, the flow channel plate outer frame is formed by five sheet members, but the flow channel plate outer frame may be formed by two to four sheet members, or six or more sheet members.

In addition, in the aforementioned embodiment, the example in which the flow channel plate outer frame has the anode connection grooves and the cathode connection grooves has been described. However, not limited thereto, the flow channel plate outer frame may have the anode connection grooves, and the electrode plate outer frame may have the cathode connection grooves. Alternatively, the electrode plate outer frame may have the anode connection groove and the cathode connection grooves. Namely, it is sufficient that the electrochemical cell includes the anode connection grooves and the cathode connection grooves.

## Claims

1. An electrochemical cell stack comprising:
a plurality of electrochemical cell stacked one on another; and
an electric potential measurement terminal for measuring an electric potential of the electrochemical cell;
wherein:
the electrochemical cell including:
an electrode plate having a diaphragm, an anode electrode arranged on one main surface of the diaphragm, and a cathode electrode arranged on the other main surface of the diaphragm;
a flow channel plate stacked on the electrode plate, the flow channel plate having an anode flow channel arranged to face the anode electrode, through which an anode fluid flows, and a cathode flow channel arranged to face the cathode electrode, through which a cathode fluid flows;
an electrode plate outer frame arranged outside the electrode plate;
a flow channel plate outer frame arranged outside the flow channel plate; and
a sealing member arranged between the electrode plate outer frame and the flow channel plate outer frame;
the flow channel plate outer frame is formed by adhering a plurality of sheet members by an adhesive;
the electric potential measurement terminal is partially arranged between the sheet members;
the electric potential measurement terminal includes a first end portion and a second end portion opposite to the first end portion;
the second end portion of the electric potential measurement terminal extends outside the electrochemical cell; and
the first end portion of the electric potential measurement terminal is connected in a bent state to one main surface of the flow channel plate at a position inside the sealing member.

2. An electrochemical cell stack comprising:
a plurality of electrochemical cells stacked one on another; and
an electric potential measurement terminal for measuring an electric potential of the electrochemical cell;
wherein:
the electrochemical cell including:
an electrode plate having a diaphragm, an anode electrode arranged on one main surface of the diaphragm, and a cathode electrode arranged on the other main surface of the diaphragm;
a flow channel plate stacked on the electrode plate, the flow channel plate having an anode flow channel arranged to face the anode electrode, through which an anode fluid flows, and a cathode flow channel arranged to face the cathode electrode, through which a cathode fluid flows;
an electrode plate outer frame arranged outside the electrode plate;
a flow channel plate outer frame arranged outside the flow channel plate; and
a sealing member arranged between the electrode plate outer frame and the flow channel plate outer frame;
the flow channel plate outer frame is formed by adhering a plurality of sheet members by an adhesive;
the electric potential measurement terminal is partially arranged between the sheet members;
the electric potential measurement terminal includes a first end portion and a second end portion opposite to the first end portion;
the second end portion of the electric potential measurement terminal extends outside the electrochemical cell; and
the first end portion of the electric potential measurement terminal is connected to one main surface of the flow channel plate at a position outside the sealing member.

3. An electrochemical cell stack comprising:
a plurality of electrochemical cells stacked one on another; and
an electric potential measurement terminal for measuring an electric potential of the electrochemical cell;
wherein:
the electrochemical cell including:
an electrode plate having a diaphragm, an anode electrode arranged on one main surface of the diaphragm, and a cathode electrode arranged on the other main surface of the diaphragm;
a flow channel plate stacked on the electrode plate, the flow channel plate having an anode flow channel arranged to face the anode electrode, through which an anode fluid flows, and a cathode flow channel arranged to face the cathode electrode, through which a cathode fluid flows;
an electrode plate outer frame arranged outside the electrode plate;
a flow channel plate outer frame arranged outside the flow channel plate; and
a sealing member arranged between the electrode plate outer frame and the flow channel plate outer frame;
the flow channel plate outer frame is formed by adhering a plurality of sheet members by an adhesive;
the electric potential measurement terminal is partially arranged between the sheet members;
the electric potential measurement terminal includes a first end portion and a second end portion opposite to the first end portion;
the second end portion of the electric potential measurement terminal extends outside the electrochemical cell; and
the first end portion of the electric potential measurement terminal is connected to an edge portion of the flow channel plate at a position inside the sealing member.

4. The electrochemical cell stack according to claim 3, wherein the electric potential measurement terminal is integrated with the flow channel plate.
